# EUROPEAN PATENT APPLICATION

(11) **EP 4 641 651 A1**
(43) Date of publication of application: **29.10.2025**
(21) Application number: 23906416.5
(22) Date of filing: 05.10.2023
(51) Int. Cl.: H01M 4/13, H01M 4/02, H01M 10/04, H01M 10/0525, H01M 10/058

(54) **BATTERY AND METHOD FOR PRODUCING SAME**

(30) Priority: 23.12.2022 JP 2022207589
(71) Applicant: Vehicle Energy Japan Inc., Ibaraki 312-8505 (JP)
(72) Inventor: SUZUKI, Takayuki, Hitachinaka-shi, Ibaraki 312-8505 (JP)
(74) Representative: Mewburn Ellis LLP
(86) International application number: PCT/JP2023/036447
(87) International publication number: WO 2024/135041

(57) **Abstract**

The present invention is a battery including an electrode body (charge/discharge body 10) in which a positive electrode sheet 11 and a negative electrode sheet 12 are stacked, and the positive electrode sheet includes: a positive electrode current collection layer 11S including a positive electrode current collection foil body 11a and a positive electrode current collection tab 11b, the positive electrode current collection tab protruding from an edge end 11c of the positive electrode current collection foil body in a width direction; a positive electrode active material layer 11T stacked on the positive electrode current collection foil body except for an edge area 720 of the positive electrode current collection foil body in the width direction; and a heat resistant layer 11Q stacked on the edge area, a base section area 710 of the positive electrode current collection tab, and the positive electrode active material layer.

## Description

### [Technical Field]

The present invention relates to a battery and a manufacturing method for the battery.

### [Background Art]

Conventionally, a secondary battery in which a plurality of terminal portions (electrode current collection tabs) are formed on a wound electrode sheet has been known. Patent Literature 1 discloses a positive electrode sheet including a positive electrode current collection tab protruding from an end part of a metal foil in a width direction. In the positive electrode sheet, an edge area of the metal foil in the width direction includes an area in which no positive electrode active material is formed, and an insulating layer is formed on this area and a base section of the positive electrode current collection tab, which is closer to the metal foil. The insulating layer can reinforce the base section of the positive electrode current collection tab, where stress tends to concentrate.

### [Citation List]

### [Patent Literature]

[Patent Literature 1] Japanese Translation of PCT International Application Publication No. 2021-500734

### [Summary of Invention]

### [Technical Problem]

The positive electrode sheet of the secondary battery described above has room for improvement in reduction of occurrence of deformation such as wrinkles and warpage near a base of the electrode current collection tab due to difference in elongation rate between an active material layer and the insulating layer when roll press is performed after an active material is applied to the metal foil or when the positive electrode sheet with a negative electrode sheet and a separator are wound to form an electrode body.

Thus, the present invention is intended to provide a battery in which deformation is unlikely to occur to an electrode current collection tab of a positive electrode sheet, and a manufacturing method for the battery.

### [Solution to Problem]

To achieve the intention, the present invention provides a battery including a charge/discharge body in which a positive electrode sheet and a negative electrode sheet are stacked, and the positive electrode sheet includes: a positive electrode current collection layer including a positive electrode current collection foil body and a positive electrode current collection tab, the positive electrode current collection tab protruding from an edge end of the positive electrode current collection foil body in a width direction; a positive electrode active material layer stacked on the positive electrode current collection foil body except for an edge area of the positive electrode current collection foil body in the width direction; and a heat resistant layer stacked on the edge area, a base section area of the positive electrode current collection tab, and the positive electrode active material layer.

Moreover, the present invention provides a manufacturing method for a battery including an electrode body, the manufacturing method winding and stacking the positive electrode sheet and the negative electrode sheet described above with a separator in between to produce the electrode body.

### [Advantageous Effects of Invention]

With the present invention, it is possible to provide a battery in which deformation is unlikely to occur to an electrode current collection tab of a positive electrode sheet, and a manufacturing method for the battery.

### [Brief Description of Drawings]

[Figure 1] Figure 1 is a perspective view showing a battery 1.
[Figure 2] Figure 2 is a sectional perspective view showing a periphery of a negative electrode terminal 42 of the battery 1.
[Figure 3] Figure 3 is a cross-sectional view showing the periphery of the negative electrode terminal 42 of the battery 1.
[Figure 4] Figure 4 is a sectional perspective view showing a periphery of a positive electrode terminal 41 of the battery 1.
[Figure 5] Figure 5 is a cross-sectional view showing the periphery of the positive electrode terminal 41 of the battery 1.
[Figure 6] Figure 6 is an exploded perspective view showing the battery 1.
[Figure 7] Figure 7 is a perspective view showing a charge/discharge body 10 of the battery 1.
[Figure 8A] Figure 8A is a plan view of a positive electrode sheet 11.
[Figure 8B] Figure 8B is a cross-sectional view of the positive electrode sheet 11 in a latitudinal direction (width direction: Z-axis direction) when viewed in an 8B direction.
[Figure 8C] Figure 8C is a section of a second embodiment of the positive electrode sheet 11.
[Figure 9A] Figure 9A is a cross-sectional view showing an example of a structure in which a negative electrode sheet 12 is wound and placed over the positive electrode sheet 11 shown in Figure 8A with a separator 13 in between.
[Figure 9B] Figure 9B is a cross-sectional view showing an example of a structure in which the negative electrode sheet 12 is wound and placed over the positive electrode sheet 11 shown in Figure 8B with the separator 13 in between.
[Figure 10] Figure 10 is a perspective view showing electrodes (the positive electrode sheet 11 and the negative electrode sheet 12) of the battery 1 and the separator 13.
[Figure 11] Figure 11 is an exploded perspective view showing the periphery of the negative electrode terminal 42 of the battery 1.
[Figure 12] Figure 12 is an exploded perspective view showing a lid 52 and a sealing plug 53 of the battery 1.
[Figure 13] Figure 13 is an exploded perspective view showing the periphery of the positive electrode terminal 41 of the battery 1.
[Figure 14] Figure 14 is a perspective view showing a manufacturing method for current collection foils (a positive electrode current collection layer 11S and a negative electrode current collection layer 12S) of the electrodes (the positive electrode sheet 11 and the negative electrode sheet 12) of the battery 1.

### [Description of Embodiments]

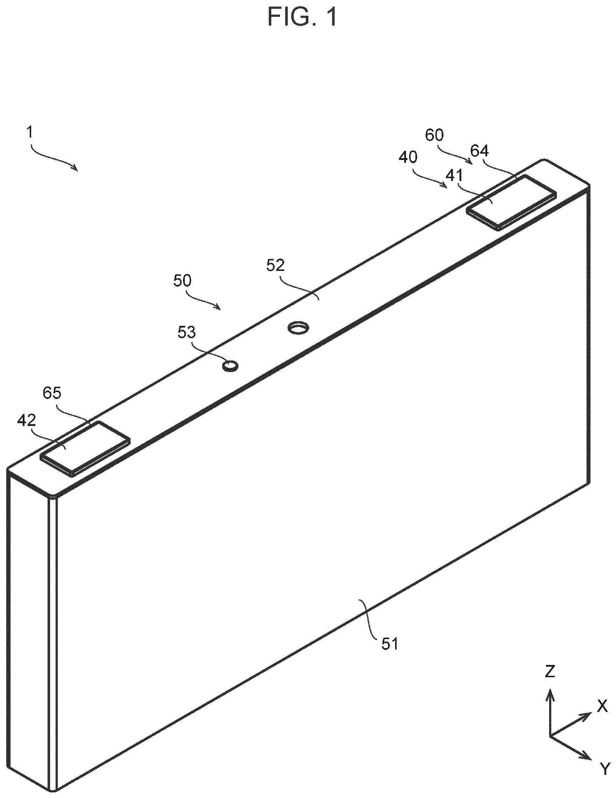

A configuration of a battery 1 in a first embodiment is explained with reference to the drawings. The battery 1 includes, for example, as shown in Figure 1 to Figure 5, a charge/discharge body (electrode body)10 that charges and discharges electricity, a collector 20 coupled to the charge/discharge body 10, a current interrupter 30 coupled to the collector 20, an external terminal 40 coupled to the collector 20 or the current interrupter 30, and an exterior body 50 in or to which the constituent members of the battery 1 are housed or attached. The battery 1 includes an insulator 60 that insulates the constituent members of the battery 1 and the exterior body 50, and a sealing body 70 that seals the constituent members of the battery 1 and the exterior body 50.

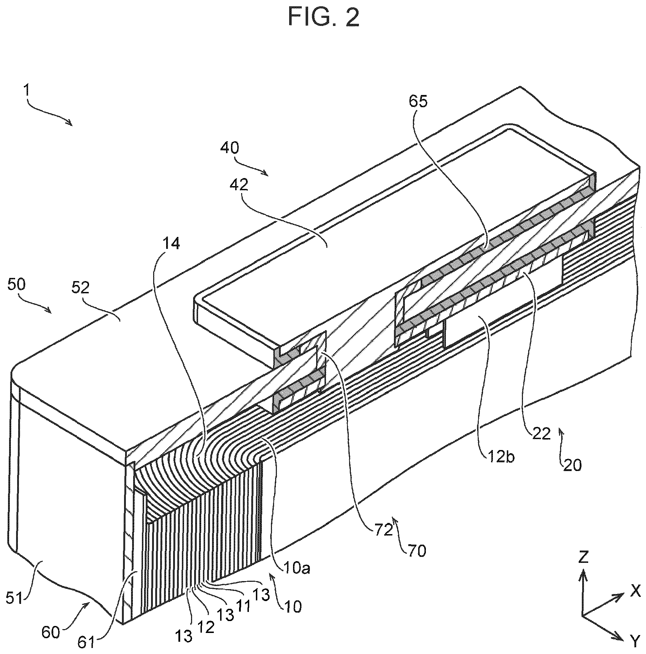

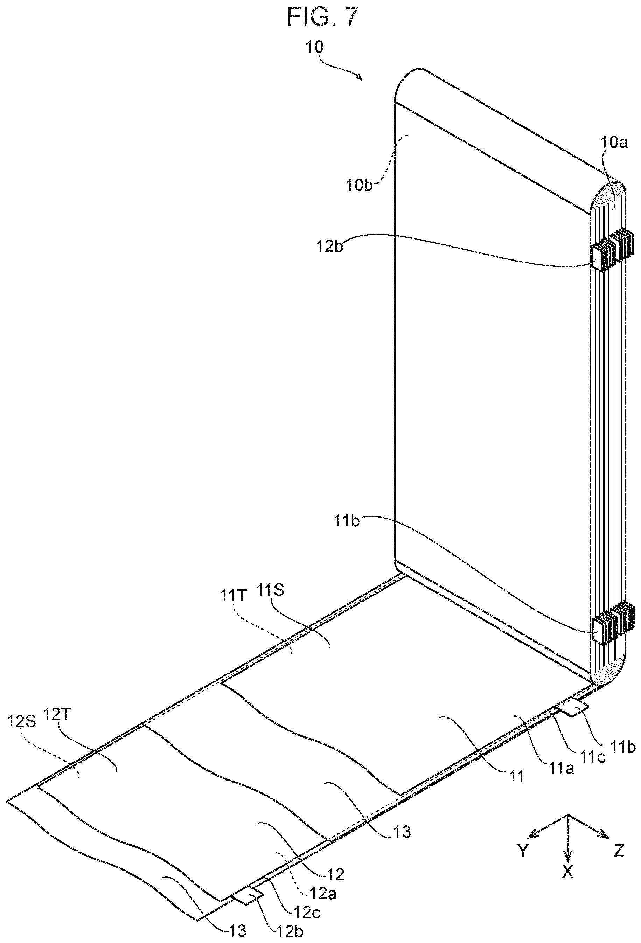

The charge/discharge body 10 charges and discharges electricity. The charge/discharge body 10 shown in Figure 2 to Figure 7 includes a positive electrode 11, a negative electrode 12, separators 13 (insulating members), and an electrolyte 14. As shown in Figure 7, the charge/discharge body 10 is configured by winding, in a rectangular parallelepiped shape, the constituent members stacked in the order of the positive electrode 11, the separators 13, the negative electrode 12, and the separators 13.

The positive electrode sheet 11 includes, for example, as shown in Figure 7, a positive electrode current collection layer 11S (current collection foil) made of a metal foil in a sheet shape, and a positive electrode active material layer 11T stacked on and joined to the positive electrode current collection layer 11S. The positive electrode current collection layer 11S includes a positive electrode current collection foil body 11a and a positive electrode current collection tab 11b. The positive electrode current collection foil body 11a is wound. The positive electrode active material layer 11T is stacked on and joined to the positive electrode current collection foil body 11a.

For example, as shown in Figure 7, the positive electrode current collection tab 11b (terminal portion) extends in a longitudinal direction (winding direction) of the positive electrode current collection foil body 11a and protrudes in a width direction (latitudinal direction of the positive electrode current collection foil body 11a) from an edge end 11c in the width direction. The positive electrode current collection tab 11b is formed integrally with the positive electrode current collection foil body 11a. A plurality of positive electrode current collection tabs 11b are formed for one positive electrode current collection foil body 11a.

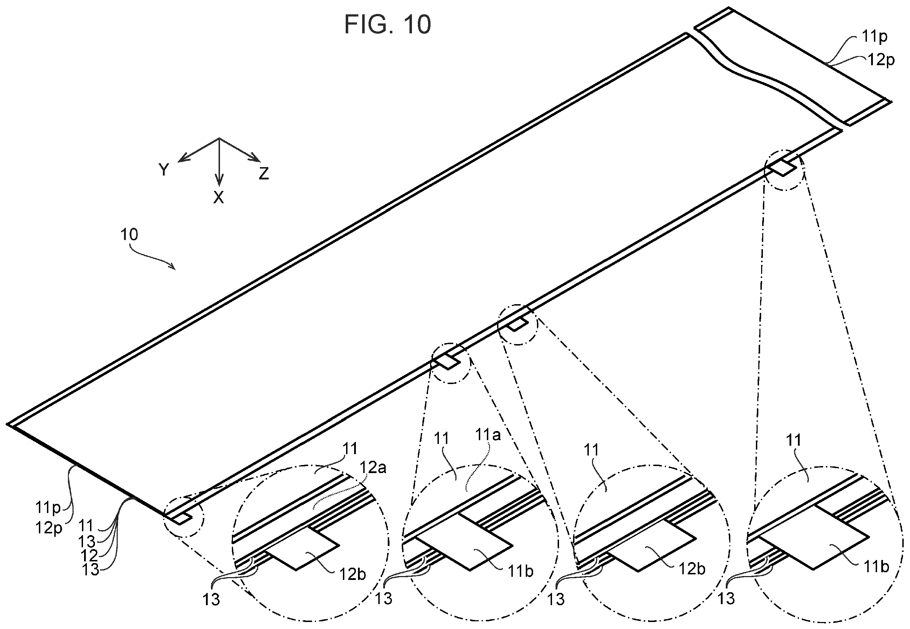

As for an interval between positive electrode current collection tabs 11b adjacent to each other in the winding direction, it suffices to have a configuration including the positive electrode current collection tabs 11b configured such that the adjacent interval relatively increases from one end part 11p (Figure 10) of the positive electrode current collection foil body 11a to the other end part 11q. In other words, all positive electrode current collection tabs 11b are not limited to the configuration in which the interval between positive electrode current collection tabs 11b adjacent to each other in the winding direction relatively increases from the one end part 11p of the positive electrode current collection foil body 11a to the other end part 11q. For example, the positive electrode current collection tabs 11b adjacent to each other in the winding direction may be configured to alternately have an equal pitch and an inequal pitch from the one end part 11p of the positive electrode current collection foil body 11a to the other end part 11q.

The metal foil of the positive electrode current collection layer 11S is formed by, for example, aluminum or an aluminum alloy. The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode sheet 12 includes, for example, as shown in Figure 7, a negative electrode current collection layer 12S (current collection foil) made of a metal foil in a sheet shape, and a negative electrode active material layer 12T stacked on and joined to the negative electrode current collection layer 12S. The negative electrode current collection layer 12S includes a negative electrode current collection foil body 12a and a negative electrode current collection tab 12b. The negative electrode active material layer 12T is stacked on and joined to the negative electrode current collection foil body 12a. The negative electrode active material layer 12T faces, for example, the entire area of the negative electrode current collection foil body 12a in a latitudinal direction (Z-axis direction).

For example, as shown in Figure 7, the negative electrode current collection tab 12b (terminal portion) protrudes in a latitudinal direction of the negative electrode current collection foil body 12a from an edge end 12c of the negative electrode current collection foil body 12a in a longitudinal direction (winding direction). In a state of being stacked on the positive electrode sheet 11 with the separator 13 in between, the negative electrode current collection tab 12b protrudes in the same direction as the positive electrode current collection tabs 11b of the positive electrode sheet 11. In the state of being stacked on the positive electrode sheet 11 with the separator 13 in between, the negative electrode current collection tab 12b is separating from the positive electrode current collection tabs 11b of the positive electrode sheet 11. The negative electrode current collection tab 12b is formed integrally with the negative electrode current collection foil body 12a. A plurality of negative electrode current collection tabs 12b are formed for one negative electrode current collection foil body 12a.

Similarly to the positive electrode current collection tabs 11b, the negative electrode current collection tabs 12b are configured with what is called an inequal pitch. Specifically, the interval between negative electrode current collection tabs 12b adjacent to each other in the winding direction is configured to be relatively longer for adjacent negative electrode current collection tabs 12b on a side closer to the other end part 12q of the negative electrode current collection foil body 12a at completion of winding than adjacent negative electrode current collection tabs 12b on a side closer to one end part 12p (Figure 10) of the negative electrode current collection foil body 12a at start of winding. All negative electrode current collection tabs 12b overlap one another in a state in which the negative electrode current collection foil body 12a is wound. As for the interval between the negative electrode current collection tabs 12b, similarly to the interval between the positive electrode current collection tabs 11b, it suffices to have a configuration including the negative electrode current collection tabs 12b configured such that the adjacent interval relatively increases from the one end part 12p of the negative electrode current collection foil body 12a to the other end part 12q.

The metal foil of the negative electrode current collection layer 12S is formed by, for example, copper or a copper alloy. The negative electrode active material layer 12T includes a negative electrode active material, a binder, a conductive auxiliary agent, and the like formed by a carbon-based material. As the carbon-based material, for example, graphite is used.

For example, as shown in Figure 7, the separator 13 (insulator) allows lithium ions to pass while insulating the positive electrode sheet 11 and the negative electrode sheet 12. The separator 13 is formed in a sheet shape. The separator 13 is long in width in the latitudinal direction (the Z-axis direction) compared with the positive electrode current collection foil body 11a of the positive electrode sheet 11 and the negative electrode current collection foil body 12a of the negative electrode sheet 12. Both ends in the latitudinal direction of the positive electrode current collection foil body 11a of the positive electrode sheet 11 and both ends in the latitudinal direction of the negative electrode current collection foil body 12a of the negative electrode sheet 12 are positioned in a range extending in the latitudinal direction of the separator 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separator-less configuration.

The electrolyte 14 is equivalent to a so-called electrolytic solution. The electrolyte 14 is impregnated in the separator 13. The electrolyte 14 includes an organic solvent, a supporting electrolyte, and an additive. As the organic solvent, for example, carbonic ester is used. As the supporting electrolyte, for example, lithium salt is used. The electrolyte 14 and the separator 13 may be replaced with sheet-shaped solid electrolyte.

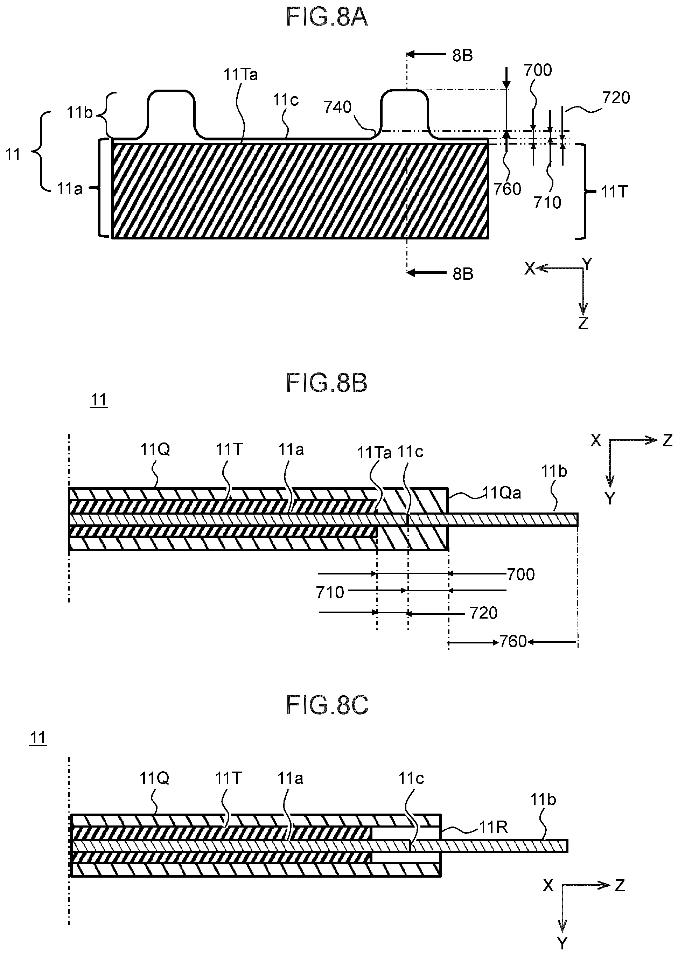

Figure 8A is a plan view of the positive electrode sheet 11, and Figure 8B is a cross-sectional view of the positive electrode sheet 11 in the latitudinal direction (width direction: Z-axis direction) when viewed in an 8B direction. In Figure 8A, illustration of a heat resistant layer 11Q in Figure 8B is omitted. The positive electrode active material layer 11T is stacked on the positive electrode current collection foil body 11a across the entire area of each of both surfaces of the positive electrode current collection foil body 11a other than an edge area 720 with a predetermined width from the edge end 11c on the positive electrode current collection tab 11b side. The edge area 720 is an area (for example, 2 to 6 mm) between an edge end 11Ta of the positive electrode active material layer 11T in the latitudinal direction and the edge end 11c of the positive electrode current collection foil body 11a in the latitudinal direction. Arrows denoted by reference signs indicate the Z-axis direction.

Each positive electrode current collection tab 11b includes a joining section 760 welded and coupled to the collector 20 coupled to the external terminal 40, and a curved portion 740 extending from the joining section 760 to the edge end 11c of the positive electrode current collection foil body 11a. Reference sign 710 denotes a base section area of the positive electrode current collection tab 11b. The base section area 710 is an area between the edge end 11c of the positive electrode current collection foil body 11a, which is a start end of the curved portion 740, and a terminal end of the positive electrode current collection tab 11b on a distal end side.

As an example, the width of the edge area 720 is equal to or smaller than the width of the base section area 710. Accordingly, the positive electrode active material layer 11T can be used to the maximum extent. This is preferable from the perspective of battery input-output improvement. As another example, the width of the edge area 720 is larger than the width of the base section area 710. Accordingly, a large width can be provided between the active material layer 11T and the edge end 11c, and thus layers can be stably formed in this area.

The heat resistant layer 11Q is stacked on the entire area of the positive electrode active material layer 11T and an area 700 including the edge area 720 and the base section area 710. The positive electrode sheet 11 in Figure 8B is obtained by producing the positive electrode active material layer 11T and the heat resistant layer 11Q on the positive electrode current collection foil body 11a and then performing a press process by using a press roll and forming the positive electrode current collection tabs 11b by press, machining fabrication, or laser fabrication.

When the positive electrode sheet, the negative electrode sheet, and the separator are wound, the heat resistant layer is positioned between the separator and the positive electrode active material layer. As a structure demanded for the heat resistant layer to prevent decrease of battery reaction, lithium ions in the electrolytic solution are allowed to easily pass. Thus, the heat resistant layer only needs to be a material having a porous structure with a porous material. For example, the heat resistant layer is a ceramic coat. As for the thickness of the heat resistant layer, it is advantageous that the heat resistant layer is thin if priority is on battery performance (priority is on reaction), and the heat resistant layer is made thick if priority is on safety.

According to the positive electrode sheet 11 in Figure 8B, since the active material layer 11T, the edge area 720 of the positive electrode current collection foil body 11a, and the base section area 710 of the positive electrode current collection tab 11b are uniformly covered by the heat resistant layer 11Q, a problem with difference in elongation rate is solved. Thus, deformation such as bending, warpage, and wrinkles of the positive electrode current collection tab 11b when the positive electrode sheet 11 is wound to form the charge/discharge body 10 is reduced, joining of the positive electrode current collection tab 11b and the collector 20 is improved, and conduction defect is solved.

A distal end of the base section area 710 is preferably set to be within twice a distance (760) from the edge end 11c of the positive electrode current collection foil body 11a to a terminal end of the curved portion 740 in a protrusion direction of the positive electrode current collection tab 11b. With this, it is possible to sufficiently ensure the area of exposure of the positive electrode current collection tab 11b from the heat resistant layer 11Q and avoid welding defect between the positive electrode current collection tab 11b and the collector 20.

Figure 8C is a second embodiment of the positive electrode sheet 11. Although the heat resistant layer 11Q is stacked on the area 700 in an embodiment of Figure 8B, an insulating layer 11R is stacked on the area 700 in place of the heat resistant layer 11Q in the embodiment of Figure 8C. The heat resistant layer 11Q is stacked on the positive electrode active material layer 11T and the insulating layer 11R. Stiffness of the positive electrode current collection tab 11b is increased by the insulating layer 11R.

The insulating layer 11R includes at least an insulating material and a binding material. The insulating material includes, for example, at least one selected from aluminum oxide (for example, α-alumina), silica, acrylic resin, magnesia, calcia, titania, zirconia, boehmite, and magnesium hydroxide. The binding material at least includes at least one selected from styrene butadiene rubber, carboxy methyl cellulose, and its salts.

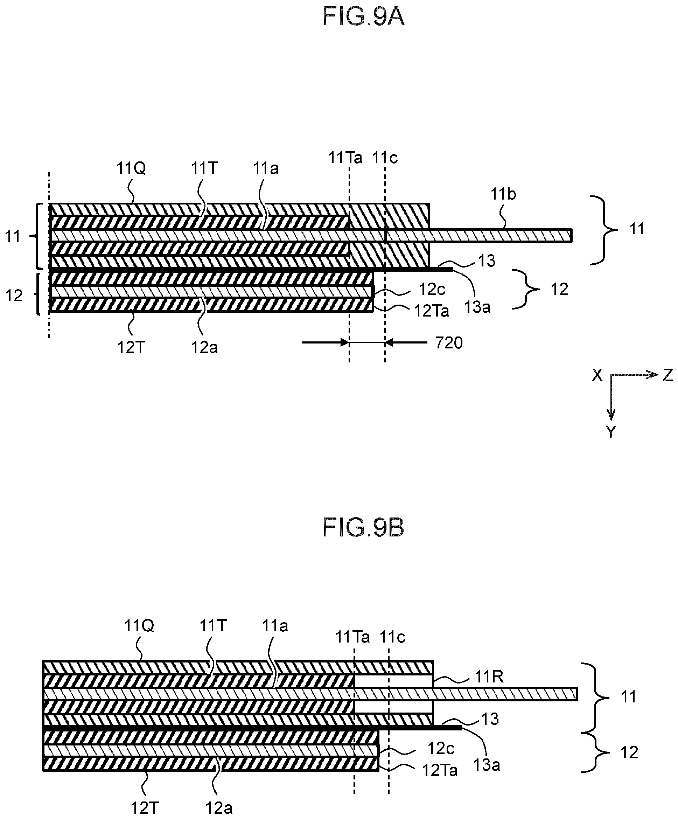

Figure 9A is a cross-sectional view showing an example of a structure in which the negative electrode sheet 12 is wound and placed over the positive electrode sheet 11 shown in Figure 8A with the separator 13 in between. Figure 9B is a cross-sectional view showing an example of a structure in which the negative electrode sheet 12 is wound and placed over the positive electrode sheet 11 shown in Figure 8B with the separator 13 in between. The negative electrode active material layer 12T is stacked on the entire areas of both surfaces of the negative electrode current collection foil body 12a. Specifically, the edge end 12c of the negative electrode current collection foil body 12a and an edge end 12Ta of the negative electrode active material layer 12T are terminated at the same position.

The edge end 12c of the negative electrode current collection foil body 12a is short in width in the latitudinal direction (the Z-axis direction) compared with the edge end 11c of the positive electrode current collection foil body 11a of the positive electrode sheet 11. The edge end 12c of the negative electrode current collection foil body 12a is positioned in a range of the edge area 720 between the edge end 11c of the positive electrode current collection foil body 11a of the positive electrode sheet 11 and the edge end 11Ta of the positive electrode active material layer 11T. As a result, the position of an electrode edge (the edge end 12c of the negative electrode current collection foil body 12a) where metal burrs are likely to occur is on an inner side of the edge end 11c of the positive electrode current collection foil body 11a in the width direction of the sheet, thereby preventing short circuit. Moreover, an edge end 13a of the separator 13 in the width direction is positioned on an outer side of the edge end 11c of the positive electrode current collection foil body 11a in the width direction. With this, short circuit is prevented.

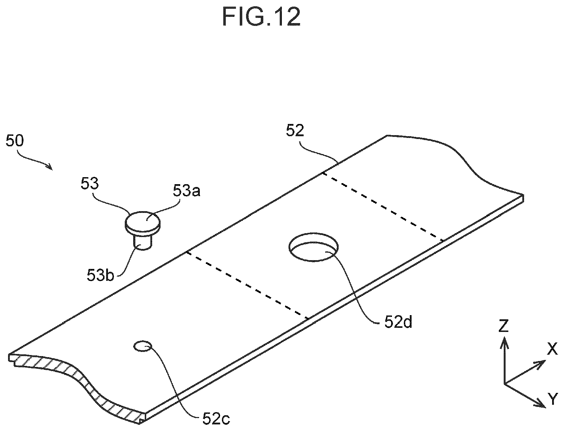

Although an example in which the negative electrode current collection tabs 12b protrude in the same direction as the positive electrode current collection tabs 11b is explained above, the current collection tabs 12b may protrude in the opposite direction to the positive electrode current collection tabs 11b. In Figures 9A and 9B, 12c and 12Ta denote end faces on a side opposite a side on which the negative electrode current collection tabs 12b protrude.

The collector 20 is coupled to the charge/discharge body 10. The collector 20 shown in Figure 2 to Figure 5, Figure 11, and Figure 13 includes a positive electrode current collection plate 21 and a negative electrode current collection plate 22.

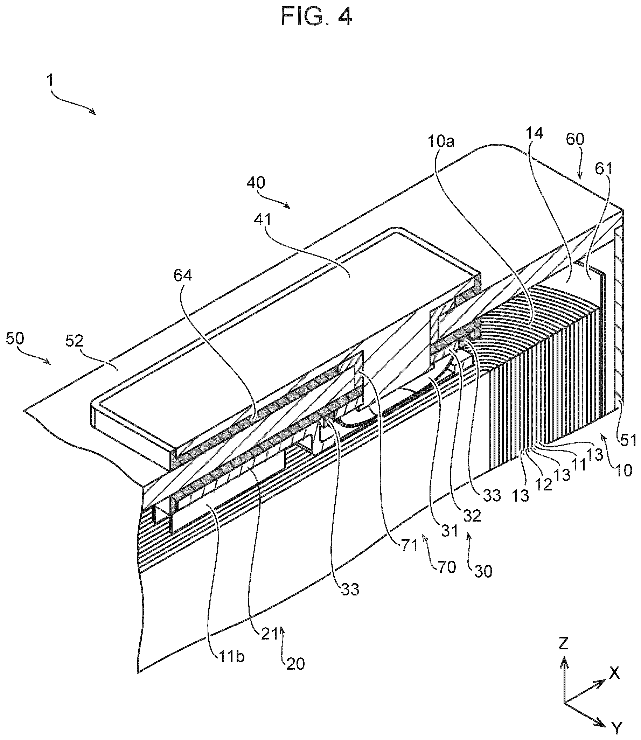

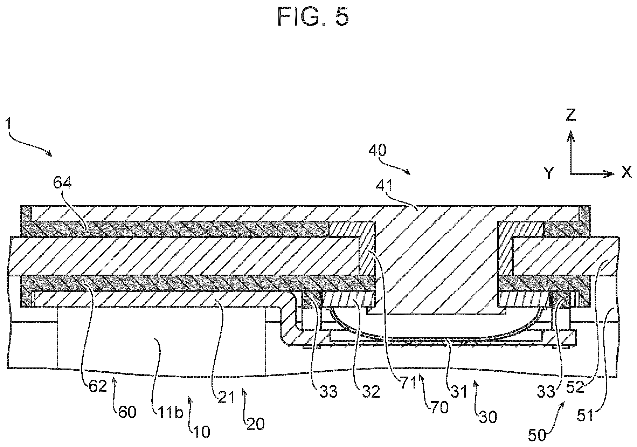

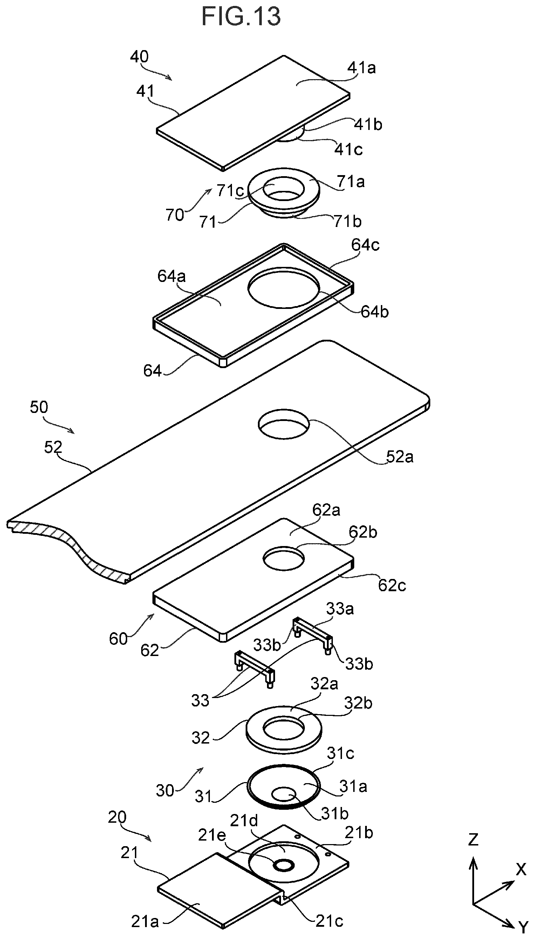

For example, as shown in Figure 4 and Figure 5, the positive electrode current collection plate 21 electrically couples the positive electrode current collection tab 11b of the charge/discharge body 10 and a positive electrode terminal 41 via the current interrupter 30. The positive electrode current collection plate 21 includes, for example, as shown in Figure 13, a rectangular parallelepiped plate-like first base section 21a, a rectangular parallelepiped plate-like second base section 21b, and a coupling section 21c that couples the first base section 21a and the second base section 21b step-wise at different heights. A recess 21d where the second base section 21b is formed thin is formed on the upper surface (the surface on the Z-axis positive direction side) of the second base section 21b. A fragile section 21e, which is a fragile portion hollowed in a ring shape, is formed at the center of the recess 21d. The positive electrode current collection plate 21 is formed by, for example, aluminum or an aluminum alloy.

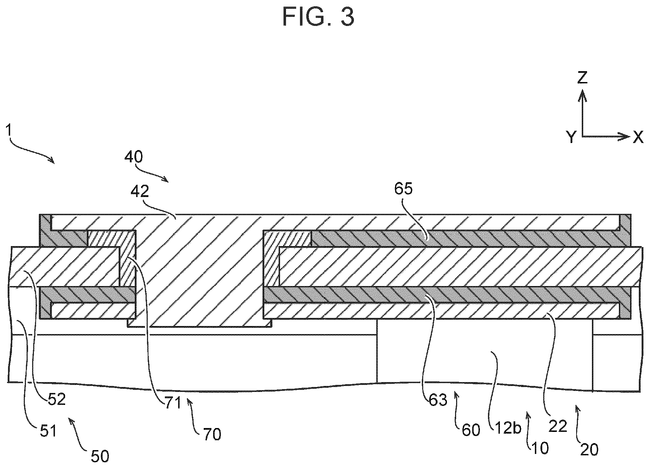

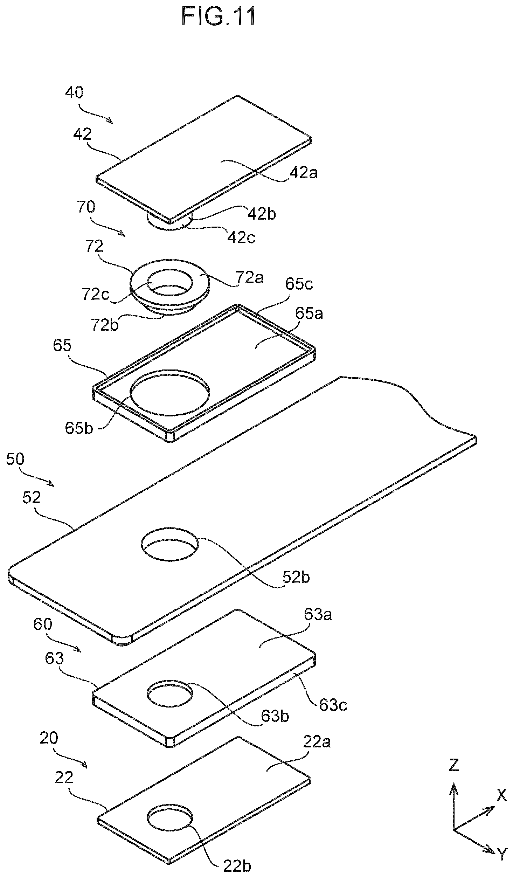

For example, as shown in Figure 2 and Figure 3, the negative electrode current collection plate 22 electrically couples the negative electrode current collection tab 12b of the charge/discharge body 10 and a negative electrode terminal 42. The negative electrode current collection plate 22 includes, for example, as shown in Figure 11, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. The negative electrode current collection plate 22 is formed by, for example, copper or a copper alloy.

The current interrupter 30 is coupled to the collector 20 and electrically couples the collector 20 and the positive electrode terminal 41. The current interrupter 30 shown in Figure 4, Figure 5, and Figure 13 includes the diaphragm 31, an electrical connection member 32, and a pair of supporting tables 33.

The diaphragm 31 includes, for example, as shown in Figure 13, a curved cylindrical main body part 31a, a disk-shaped first joining section 31b provided on the distal end side (Z-axis negative direction side) of the main body part 31a, and a ring-like second joining section 31c provided on the proximal end side (Z-axis positive direction side) of the main body part 31a. The first joining section 31b is joined to the recess 21d of the positive electrode current collection plate 21. The second joining section 31c is joined to the electrical connection member 32. The diaphragm 31 is formed by, for example, aluminum or an aluminum alloy.

For example, as shown in Figure 13, the electrical connection member 32 is formed in a cylindrical shape. A positive electrode side first insulation plate 62 is joined to the upper surface (surface on the Z-axis positive direction side) of the electrical connection member 32. The second joining section 31c of the diaphragm 31 is joined to the peripheral edge of the lower surface (surface on the Z-axis negative direction side) of the electrical connection member 32. The electrical connection member 32 is formed by, for example, aluminum or an aluminum alloy.

The supporting table 33 includes, for example, as shown in Figure 13, rectangular parallelepiped main body sections 33a extending in the latitudinal direction (in the Y-axis direction) of the battery 1 and leg sections 33b extending downward (in the Z-axis negative direction) from both the sides in the longitudinal direction (in the Y-axis direction) of the main body sections 33a. One supporting table 33 is provided at each of both the ends in the longitudinal direction (in the X-axis direction) of the battery 1 of the diaphragm 31. The main body sections 33a are attached to the positive electrode side first insulation plate 62. The leg sections 33b are attached to the second base section 21b of the positive electrode current collection plate 21. The supporting table 33 is formed by, for example, insulating resin.

The external terminal 40 is coupled to the collector 20 or the current interrupter 30. The external terminal 40 shown in Figure 1 to Figure 6, Figure 11, and Figure 13 includes the positive electrode terminal 41 and the negative electrode terminal 42.

For example, as shown in Figure 5 the positive electrode terminal 41 is coupled to the electrical connection member 32 of the current interrupter 30. The positive electrode terminal 41 includes, for example, as shown in Figure 13, a rectangular parallelepiped plate-like base section 41a, a columnar insertion section 41b projecting downward (in the Z-axis negative direction) from the base section 41a, and a cylindrical joining section 41c projecting downward (in the Z-axis negative direction) from the peripheral edge of the base section 41a.

For example, as shown in Figure 13, the base section 41a is in contact with a base section 64a of a positive electrode side second insulation plate 64. The insertion section 41b is inserted into an insertion hole 64b of the positive electrode side second insulation plate 64, a positive electrode side insertion hole 52a of a lid 52, an insertion hole 62b of the positive electrode side first insulation plate 62, and an insertion hole 32b of the electrical connection member 32.

For example, as shown in Figure 13, the joining section 41c projects downward (in the Z-axis negative direction) from the insertion hole 32b of the electrical connection member 32 and is expanded outward in the radial direction and joined to the electrical connection member 32. That is, the joining section 41c is caulked at the peripheral edge of the insertion hole 32b of the electrical connection member 32. Further, the joining section 41c is welded at the peripheral edge of the insertion hole 32b of the electrical connection member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 11, a rectangular parallelepiped plate-like base section 42a, the columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 11, the base section 42a is in contact with a base section 65a of a negative electrode side second insulation plate 65. The insertion section 42b is inserted into an insertion hole 65b of the negative electrode side second insulation plate 65, a negative electrode side insertion hole 52b of the lid 52, an insertion hole 63b of a negative electrode side first insulation plate 63, and the insertion hole 22b of the negative electrode current collection plate 22.

For example, as shown in Figure 11, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded at the peripheral edge of the insertion hole 22b of the negative electrode current collection plate 22. The negative electrode terminal 42 is formed by, for example, copper or a copper alloy.

The constituent members of the battery 1 is housed in or attached to the exterior body 50. The exterior body 50 shown in Figure 1 to Figure 6 and Figure 11 to Figure 13 includes a container 51, the lid 52, and a sealing plug 53.

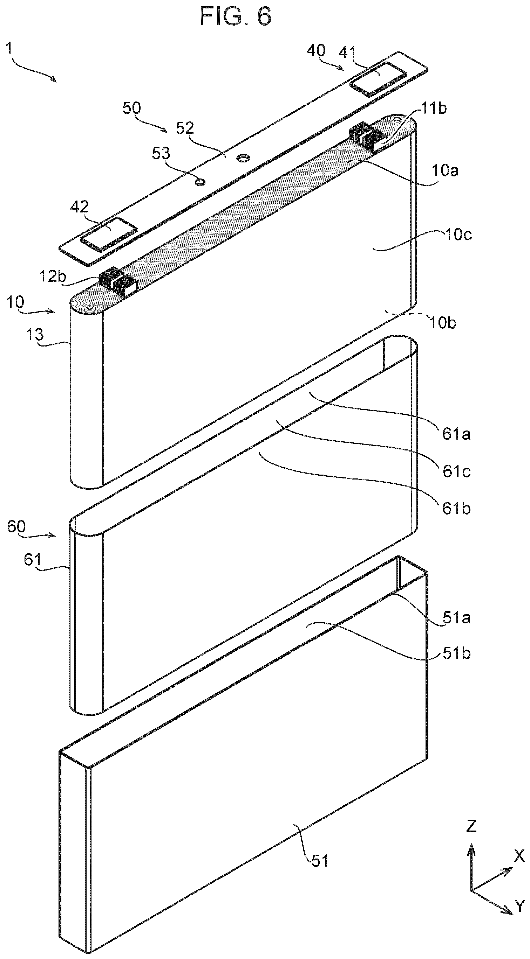

For example, as shown in Figure 2 and Figure 6, the container 51 houses the charge/discharge body 10 and the like covered by an insulation cover 61. The container 51 is configured by a rectangular parallelepiped metal can. The container 51 includes, for example, as shown in Figure 6, an opening 51a opened in the longitudinal direction and an enclosure section 51b stretching to the opening 51a. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode sheet 11, the separator 13, and the negative electrode sheet 12. The lid 52 is formed by a long plate-like metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. An insertion section 53b of the sealing plug 53 is inserted into the liquid injection hole 52c. In the lid 52, a cleavage valve 52d is formed in the center in the longitudinal direction. The lid 52 is welded to the container 51. The lid 52 is formed by, for example, aluminum or an aluminum alloy.

For example, as shown in Figure 12, the sealing plug 53 seals the liquid injection hole 52c of the lid 52. The sealing plug 53 is formed in a columnar shape. The sealing plug 53 includes a head section 53a having a relatively large outer diameter and the insertion section 53b continuous to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 2 to Figure 6, Figure 11, and Figure 13 includes the insulation cover 61, the positive electrode side first insulation plate 62, the negative electrode side first insulation plate 63, the positive electrode side second insulation plate 64, and the negative electrode side second insulation plate 65.

For example, as shown in Figure 6, the insulation cover 61 covers and insulates the charge/discharge body 10. The insulation cover 61 includes a pair of side surfaces (a first side surface 61a and a second side surface 61b) facing each other and an opening 61c that exposes the one side section 10a of the charge/discharge body 10 between the first side surface 61a (one of the side surfaces) and the second side surface 61b (the other side surface). The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential section 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulation plate 62 insulates the positive electrode current collection plate 21 and the electrical connection member 32 from the lid 52. The positive electrode side first insulation plate 62 includes, for example, as shown in Figure 13, a rectangular parallelepiped plate-like base section 62a, the insertion hole 62b piercing through the base section 62a, and a projection 62c surrounding the edge end of the base section 62a in an annular shape and projecting in a direction away from the lid 52. In the positive electrode side first insulation plate 62, the positive electrode current collection plate 21, the electrical connection member 32, and the like are housed in a space formed by the base section 62a and the projection 62c. The insertion section 41b of the positive electrode terminal 41 is inserted into the insertion hole 62b. The positive electrode side first insulation plate 62 is formed by, for example, insulating resin.

For example, as shown in Figure 3, the negative electrode side first insulation plate 63 insulates the negative electrode current collection plate 22 and the lid 52. The negative electrode side first insulation plate 63 includes, for example, as shown in Figure 11, a rectangular parallelepiped plate-like base section 63a, the insertion hole 63b piercing through the base section 63a, and a projection 63c surrounding the edge end of the base section 63a in an annular shape and projecting in a direction away from the lid 52. In the negative electrode side first insulation plate 63, the negative electrode current collection plate 22 is housed in a space formed by the base section 63a and the projection 63c. The insertion section 42b of the negative electrode terminal 42 is inserted into the insertion hole 63b. The negative electrode side first insulation plate 63 is formed by, for example, insulating resin.

For example, as shown in Figure 5, the positive electrode side second insulation plate 64 insulates the positive electrode terminal 41 and the lid 52. For example, as shown in Figure 13, the positive electrode side second insulation plate 64 includes the rectangular parallelepiped plate-like base section 64a, the insertion hole 64b piercing through the base section 64a, and a projection 64c surrounding the edge end of the base section 64a in an annular shape and projecting in a direction away from the lid 52. In the positive electrode side second insulation plate 64, the positive electrode terminal 41 is housed in a space formed by the base section 64a and the projection 64c. The insertion section 41b of the positive electrode terminal 41 is inserted into the insertion hole 64b. The positive electrode side second insulation plate 64 is formed by, for example, insulating resin.

For example, as shown in Figure 3, the negative electrode side second insulation plate 65 insulates the negative electrode terminal 42 and the lid 52. The negative electrode side second insulation plate 65 includes, for example, as shown in Figure 11, the rectangular parallelepiped plate-like base section 65a, the insertion hole 65b piercing through the base section 65a, and a projection 65c surrounding the edge end of the base section 65a in an annular shape and projecting in a direction away from the lid 52. In the negative electrode side second insulation plate 65, the negative electrode terminal 42 is housed in a space formed by the base section 65a and the projection 65c. The insertion section 42b of the negative electrode terminal 42 is inserted into the insertion hole 65b. The negative electrode side second insulation plate 65 is formed by, for example, insulating resin.

The sealing body 70 seals the constituent members of the battery 1 and the exterior body 50. The sealing body 70 shown in Figure 2 to Figure 5, Figure 11, and Figure 13 includes a positive electrode side gasket 71 and a negative electrode side gasket 72.

For example, as shown in Figure 5, the positive electrode side gasket 71 insulates the positive electrode side second insulation plate 64 and the lid 52. The positive electrode side gasket 71 is formed in a cylindrical shape. The positive electrode side gasket 71 includes, for example, as shown in Figure 13, a first insertion section 71a having a relatively large outer diameter, a second insertion section 71b continuous to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulation plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulation plate 65 and the lid 52. The negative electrode side gasket 72 is formed in a cylindrical shape. The negative electrode side gasket 72 includes, for example, as shown in Figure 11, a first insertion section 72a having a relatively large outer diameter, a second insertion section 72b continuous to the first insertion section 72a and having a relatively small outer diameter, and an insertion hole 72c piercing through the first insertion section 72a and the second insertion section 72b. The first insertion section 72a of the negative electrode side gasket 72 is inserted into the insertion hole 65b of the negative electrode side second insulation plate 65. The second insertion section 72b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

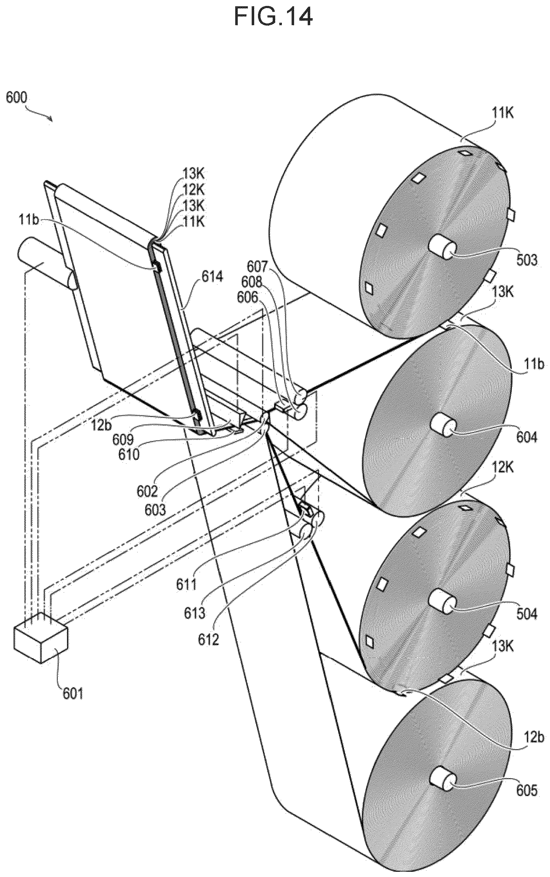

A manufacturing method for the battery 1 will be explained below with reference to Figure 14. A winding apparatus 600 includes a controller 601, a feed roller 602, a driven roller 603, a first discharge roller 604, a second discharge roller 605, a first camera 606, a first adjustment roller 607, a first driven roller 608, a cutter 609, a cutter receiving base 610, a second camera 611, a second adjustment roller 612, a second driven roller 613, and a winding spindle 614.

A first winding roller 503 around which a positive electrode sheet base material 11K is wound, and a second winding roller 504 around which a negative electrode sheet base material 12K is wound are attached to the winding apparatus 600.

The positive electrode sheet 11 is wound by the winding apparatus 600 to form the charge/discharge body 10. The controller 601 controls actuation of the first winding roller 503, the second winding roller 504, the feed roller 602, the first discharge roller 604, the second discharge roller 605, the first camera 606, the first adjustment roller 607, the cutter 609, the second camera 611, the second adjustment roller 612, and the winding spindle 614.

The first adjustment roller 607 and the first driven roller 608 are disposed between the feed roller 602 and the first winding roller 503. The first camera 606 is disposed near the first adjustment roller 607. The second adjustment roller 612 and the second driven roller 613 is disposed between the feed roller 602 and the second winding roller 504. The second camera 611 is disposed near the second adjustment roller 612. The cutter 609 and the cutter receiving base 610 are disposed between the feed roller 602 and the winding spindle 614.

The controller 601 actuates the feed roller 602. With the actuation of the feed roller 602, the positive electrode sheet base material 11K discharged from the first winding roller 503, a separator base material 13K discharged from the first discharge roller 604, the negative electrode sheet base material 12K discharged from the second winding roller 504, and the separator base material 13K discharged from the second discharge roller 605 move toward the cutter 609 and the cutter receiving base 610. The positive electrode sheet base material 11K, the separator base material 13K, the negative electrode sheet base material 12K, and the separator base material 13K are stacked in the stated order and moved toward the cutter 609 and the cutter receiving base 610 in a state of sandwiched between the feed roller 602 and the driven roller 603.

The controller 601 actuates the first camera 606 to capture an image of the positive electrode sheet base material 11K. The controller 601 determines, based on the captured image of the positive electrode sheet base material 11K, whether the position of a positive electrode current collection tab 11b formed in the positive electrode sheet base material 11K exists at a position corresponding to the start position of winding the positive electrode sheet 11 in the charge/discharge body 10.

When having determined that the position of a positive electrode current collection tab 11b does not exist at the corresponding position, the controller 601 determines that the position of the positive electrode current collection tab 11b at start of winding the positive electrode sheet base material 11K is misaligned, and adjusts the position of the positive electrode current collection tab 11b. The controller 601 actuates the first adjustment roller 607 to move the positive electrode sheet base material 11K sandwiched between the first adjustment roller 607 and the first driven roller 608 toward the cutter 609 and the cutter receiving base 610. After the position of the positive electrode current collection tab 11b at start of winding the positive electrode sheet base material 11K is adjusted by the first adjustment roller 607, a surplus part protruding from the feed roller 602 and the driven roller 603 is generated in the positive electrode sheet base material 11K.

The controller 601 actuates the cutter 609 to cut the surplus part of the positive electrode sheet base material 11K together with the cutter receiving base 610. With the above-described control by the controller 601, the start position of winding the positive electrode sheet base material 11K with respect to the charge/discharge body 10 is adjusted by using the positive electrode current collection tab 11b corresponding to the winding start position as a marker.

The controller 601 actuates the second camera 611 to capture an image of the negative electrode sheet base material 12K. The controller 601 determines whether the position of a negative electrode current collection tab 12b formed in the negative electrode sheet base material 12K based on the captured image of the negative electrode sheet base material 12K exists at a position corresponding to the start position of winding the negative electrode sheet 12 in the charge/discharge body 10. When having determined that the position of the negative electrode current collection tab 12b does not exist at the corresponding position, the controller 601 determines that the position of the negative electrode current collection tab 12b at start of winding the negative electrode sheet base material 12K is misaligned, and adjusts the position of the negative electrode current collection tab 12b.

The controller 601 actuates the second adjustment roller 612 to move the negative electrode sheet base material 12K sandwiched between the second adjustment roller 612 and the second driven roller 613 toward the cutter 609 and the cutter receiving base 610. After the position of the negative electrode current collection tab 12b at start of winding the negative electrode sheet base material 12K is adjusted by the second adjustment roller 612, a surplus part protruding from the feed roller 602 and the driven roller 603 is generated in the negative electrode sheet base material 12K. The controller 601 actuates the cutter 609 to cut the surplus part of the negative electrode sheet base material 12K together with the cutter receiving base 610. With the above-described control by the controller 601, the start position of winding the negative electrode sheet base material 12K with respect to the charge/discharge body 10 is adjusted by using the negative electrode current collection tab 12b corresponding to the winding start position as a marker.

The controller 601 actuates the feed roller 602 to feed, toward the winding spindle 614, the positive electrode sheet base material 11K, the separator base material 13K, the negative electrode sheet base material 12K, and the separator base material 13K in a state of being stacked. The controller 601 actuates the winding spindle 614 to wind the positive electrode sheet base material 11K, the separator base material 13K, the negative electrode sheet base material 12K, and the separator base material 13K in a state of being stacked.

The positive electrode sheet base material 11K, the separator base material 13K, the negative electrode sheet base material 12K, and the separator base material 13K are wound by the winding spindle 614 to form one charge/discharge body 10. The controller 601 actuates the cutter 609 to cut end parts of the positive electrode sheet base material 11K, the separator base material 13K, the negative electrode sheet base material 12K, and the separator base material 13K thus wound.

Thereafter, the charge/discharge body 10 is removed from the winding spindle 614. The charge/discharge body 10 is housed in a container 51. A lid 52 is joined to the container 51. The electrolyte 14 is injected toward the container 51 through a liquid injection hole 52c of the lid 52. The electrolyte 14 is impregnated into the separator 13. The sealing plug 53 is joined to the liquid injection hole 52c of the lid 52.

According to the above-described embodiments, batteries below are achieved. A first battery is a battery including the electrode body (charge/discharge body 10) in which the positive electrode sheet 11 and the negative electrode sheet 12 are stacked, and the positive electrode sheet includes: the positive electrode current collection layer 11S including the positive electrode current collection foil body 11a and a positive electrode current collection tab 11b, the positive electrode current collection tab 11b protruding from the edge end 11c of the positive electrode current collection foil body in the width direction; the positive electrode active material layer 11T stacked on the positive electrode current collection foil body except for the edge area 720 of the positive electrode current collection foil body in the width direction; and the heat resistant layer 11Q stacked on the edge area, the base section area 710 of the positive electrode current collection tab, and the positive electrode active material layer. According to the first battery, it is possible to provide a battery in which deformation is unlikely to occur to an electrode current collection tab of a positive electrode sheet.

A second battery is the first battery characterized in that the heat resistant layer is stacked on the edge area and the base section area of the positive electrode current collection tab, and a third battery is the first battery characterized in that the edge area and the base section area of the positive electrode current collection tab are filled with an insulating layer, and the heat resistant layer is stacked on the insulating layer.

A fourth battery is any one of the first to third batteries characterized in that the negative electrode sheet includes: the negative electrode current collection layer 12S including the negative electrode current collection foil body 12a and a negative electrode current collection tab 12b, the negative electrode current collection tab 12b protruding in the same direction as or in the opposite direction to the positive electrode current collection tab from the edge end 12c of the negative electrode current collection foil body in the width direction; and the negative electrode active material layer 12T stacked up to the edge of the negative electrode current collection foil body, and the edge end 12c of the negative electrode current collection foil body and the edge end 12Ta of the negative electrode active material layer are positioned in the range of the edge area. According to the fourth battery, the position of an electrode edge (the edge end 12c of the negative electrode current collection foil body 12a) where metal burrs are likely to occur is on the inner side of the edge end 11c of the positive electrode current collection foil body 11a in the width direction of the sheet, thereby preventing short circuit.

A fifth battery is any one of the first to fourth batteries characterized in that the positive electrode sheet and the negative electrode sheet are stacked with the separator 13 in between and the edge end 13a of the separator in the width direction is positioned on the outer side of the edge end 11c of the positive electrode current collection foil body in the width direction. According to the fifth battery, short circuit is prevented.

A sixth battery is any one of the first to fifth batteries characterized in that the battery includes the external terminal 40 and the collector 20 coupled to the external terminal, the positive electrode current collection tab includes the joining section 760 joined to the collector, and the curved portion 740 extending from the joining section to the edge end of the positive electrode current collection foil body, and the base section area is within twice the distance from the edge end of the positive electrode current collection foil body to the terminal end of the curved portion in the protrusion direction of the positive electrode current collection tab. According to the sixth battery, sufficiently ensure the area of exposure of the positive electrode current collection tab 11b from the heat resistant layer 11Q and avoid welding defect between the positive electrode current collection tab 11b and the collector 20.

Moreover, a manufacturing method for a battery including an electrode body winds and stacks the positive electrode sheet 11 and the negative electrode sheet 12 of the first to sixth batteries with the separator 13 in between to produce the electrode body. According to the manufacturing method, it is possible to manufacture a battery in which deformation is unlikely to occur to an electrode current collection tab of a positive electrode sheet.

The battery of the present invention is not limited to the configurations described in the embodiments and can be configured as appropriate based on the contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. The battery of the present invention is not limited to a configuration in which a charge/discharge body is sealed with a container and a lid. The battery of the present invention can be applied to a configuration in which a charge/discharge body is sealed with a laminate film. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### [Reference Signs List]

1: battery, 10: charge/discharge body (battery body), 11: positive electrode sheet, 11Q: heat resistant layer, 11R: insulating layer, 11S: positive electrode current collection layer, 11T: positive electrode active material layer, 11Ta: edge end of positive electrode active material layer, 11a: positive electrode current collection foil body, 11b: positive electrode current collection tab, 11c: edge end of positive electrode current collection foil body, 12: negative electrode sheet, 12S: negative electrode current collection layer, 12T: negative electrode active material layer, 12Ta: edge end of negative electrode active material layer, 12a: negative electrode current collection foil body, 12b: negative electrode current collection tab, 12c: edge end of negative electrode current collection foil body, 13: separator, 13a: edge end of separator, 14: electrolyte, 20: collector, 740: curved portion, 760: joining section

## Claims

1. A battery comprising an electrode body in which a positive electrode sheet and a negative electrode sheet are stacked,
wherein the positive electrode sheet includes
a positive electrode current collection layer including a positive electrode current collection foil body and a positive electrode current collection tab, the positive electrode current collection tab protruding from an edge end of the positive electrode current collection foil body in a width direction,
a positive electrode active material layer stacked on the positive electrode current collection foil body except for an edge area of the positive electrode current collection foil body in the width direction, and
a heat resistant layer stacked on the edge area, a base section area of the positive electrode current collection tab, and the positive electrode active material layer.

2. The battery according to claim 1, wherein the heat resistant layer is stacked on the edge area and the base section area of the positive electrode current collection tab.

3. The battery according to claim 1, wherein an insulating layer is stacked on the edge area and the base section area of the positive electrode current collection tab, and the heat resistant layer is stacked on the insulating layer.

4. The battery according to any one of claims 1 to 3, wherein
the negative electrode sheet includes
a negative electrode current collection layer including a negative electrode current collection foil body and a negative electrode current collection tab, the negative electrode current collection tab protruding in a same direction as or an opposite direction to the positive electrode current collection tab from an edge end of the negative electrode current collection foil body in a width direction, and
a negative electrode active material layer stacked up to an edge of the negative electrode current collection foil body, and
an edge end of each of the negative electrode current collection foil body and the negative electrode active material layer is positioned in a range of the edge area.

5. The battery according to any one of claims 1 to 3, wherein
the positive electrode sheet and the negative electrode sheet are stacked with a separator interposed in between, and
an edge end of the separator in a width direction is positioned on an outer side of the edge end of the positive electrode current collection foil body in the width direction.

6. The battery according to any one of claims 1 to 3, wherein
the battery includes an external terminal and a collector coupled to the external terminal,
the positive electrode current collection tab includes a joining section joined to the collector, and a curved portion extending from the joining section to the edge end of the positive electrode current collection foil body, and
the base section area is within twice a distance from the edge end of the positive electrode current collection foil body to a terminal end of the curved portion in a protrusion direction of the positive electrode current collection tab.

7. A manufacturing method for a battery including an electrode body, the manufacturing method winding and stacking the positive electrode sheet and the negative electrode sheet according to any one of claims 1 to 3 with a separator interposed in between to produce the electrode body.
